# EUROPEAN PATENT APPLICATION

(11) **EP 4 765 024 A1**
(43) Date of publication of application: **24.06.2026**
(21) Application number: 24870115.3
(22) Date of filing: 07.08.2024
(51) Int. Cl.: G06T 11/20

(54) **ROAD IMAGE GENERATION METHOD AND APPARATUS, AND COMPUTER DEVICE, STORAGE MEDIUM AND COMPUTER PROGRAM PRODUCT**

(30) Priority: 28.09.2023 CN 202311265854
(71) Applicant: Tencent Technology (Shenzhen) Company Limited, Shenzhen, Guangdong 518057 (CN)
(72) Inventor: SHAN, Dingyi, Shenzhen, Guangdong 518057 (CN)
(74) Representative: Gunzelmann, Rainer
(86) International application number: PCT/CN2024/110362
(87) International publication number: WO 2025/066566

(57) **Abstract**

A road image generation method, which is executed by a computer device. The method comprises: performing instance segmentation on road imagery to obtain an instance segmentation result, and on the basis of the instance segmentation result, generating a road surface image (S202); performing hole filling on a hole area in the road surface image, and instantiating the road surface image which has undergone the hole filling, so as to obtain an instantiated image (S204); on the basis of the edges of road instances in the instantiated image, determining a common element shared by each road instance (S206); on the basis of each road instance, performing semantic segmentation on the common element to obtain semantic information of the common element (S208); and on the basis of the semantic information of the common element, performing image editing on each road instance in the instantiated image to generate a road image (S210).

## Description

### RELATED APPLICATION

This application claims priority to Chinese Patent Application No. 2023112658548, filed with the China National Intellectual Property Administration on September 28, 2023 and entitled "ROAD IMAGE RECONSTRUCTING METHOD AND APPARATUS, COMPUTER DEVICE, AND STORAGE MEDIUM".

### FIELD OF THE TECHNOLOGY

This application relates to the technical field of computers, and in particular, to a road image generating method and apparatus, a computer device, a storage medium, and a computer program product.

### BACKGROUND OF THE DISCLOSURE

A road image includes visual information and semantic information of a road region, and may be widely applied to the fields such as navigation, automatic driving, and traffic management to support accurate route planning and path navigation.

Currently, the road image is usually generated based on a road imagery acquired from a satellite, a camera, or other sensors, the quality of the road imagery may be poor due to the quality of the sensor, a weather condition, shielding, or other factors, and consequently, the accuracy of the road image may also be affected.

### SUMMARY

This application provides a road image generating method and apparatus, a computer device, a storage medium, and a computer program product.

In a first aspect, this application provides a road image generating method, which is executed by a computer device. The method includes:
performing instance segmentation on a road imagery to obtain an instance segmentation result, and generating, based on the instance segmentation result, a road surface image:
performing void filling on a void region in the road surface image, and instantiating a void-filled road surface image to obtain an instantiated image including a plurality of road instances;
determining, based on edges of the road instances in the instantiated image, a common element shared by the road instances;
performing, according to the road instances, semantic division on the common element to obtain semantic information of the common element; and
performing, based on the semantic information of the common element, image editing on the road instances in the instantiated image to generate a road image.

In a second aspect, this application further provides a road image generating apparatus. The apparatus includes:
a road surface image generating module, configured to perform instance segmentation on a road imagery to obtain an instance segmentation result, and generate, based on the instance segmentation result, a road surface image;
an instantiated image generating module, configured to perform void filling on a void region in the road surface image, and instantiating a void-filled road surface image to obtain an instantiated image including a plurality of road instances;
a common element determining module, configured to determine, based on edges of the road instances in the instantiated image, a common element shared by the road instances;
a semantic determining module, configured to perform, according to the road instances, semantic division on the common element to obtain semantic information of the common element; and
an image processing module, configured to perform, based on the semantic information of the common element, image editing on the road instances in the instantiated image to generate a road image.

In a third aspect, this application further provides a computer device. The computer device includes a memory and a processor, the memory has a computer program stored therein, and the processor, when executing the computer program, implements operations of a road image generating method.

In a fourth aspect, this application further provides a computer-readable storage medium. The computer-readable storage medium has a computer program stored herein, and the computer program, when executed by a processor, implements operations of a road image generating method.

In a fifth aspect, this application further provides a computer program product. The computer program product includes a computer program, and the computer program, when executed by a processor, implements operations of a road image generating method.

Details of one or more embodiments of this application are provided in the drawings and descriptions below. Other features, objectives, and advantages of this application will become apparent from the specification, the drawings, and the claims.

### BRIEF DESCRIPTION OF THE DRAWINGS

To illustrate technical solutions in embodiments of this application or in the conventional technology more clearly, the accompanying drawings required for describing the embodiments or the conventional technology will be briefly introduced below. Apparently, the accompanying drawings in the following description are only some embodiments of this application, and a person of ordinary skill in the art may also be able to derive other drawings from these disclosed accompanying drawings without making creative efforts.
FIG. 1 is an application environment diagram of a road image generating method according to an embodiment.
FIG. 2 is a schematic flowchart of a road image generating method according to an embodiment.
FIG. 3 is a schematic diagram of a road imagery according to an embodiment.
FIG. 4 is a schematic diagram of a road surface image according to an embodiment.
FIG. 5 is a schematic diagram of an instantiated image according to an embodiment.
FIG. 6 is a schematic diagram of a road image according to an embodiment.
FIG. 7 is a schematic flowchart of a road image generating method according to another embodiment.
FIG. 8 is a schematic diagram of a processing result of each operation of a road image generating method according to an embodiment.
FIG. 9 is a schematic diagram of an intersection image according to an embodiment.
FIG. 10 is a schematic diagram of a conventional scheme processing result according to an embodiment.
FIG. 11 is a schematic diagram of a road image according to another embodiment.
FIG. 12 is a schematic diagram of semantic information of a road image according to an embodiment.
FIG. 13 is a schematic diagram of a reconstruction result of a large image of an intersection according to an embodiment.
FIG. 14 is a schematic diagram of a result of generating a road image according to an embodiment.
FIG. 15 is a structural block diagram of a road image generating apparatus according to an embodiment.
FIG. 16 is a diagram of an internal structure of a computer device according to an embodiment.

### DESCRIPTION OF EMBODIMENTS

The technical solutions in embodiments of this application will be clearly and completely described in the following with reference to the accompanying drawings in the embodiments of this application. Apparently, the described embodiments are merely some rather than all of the embodiments of this application. All other embodiments obtained by a person of ordinary skill in the art based on the embodiments of this application without creative efforts shall fall within the protection scope of this application.

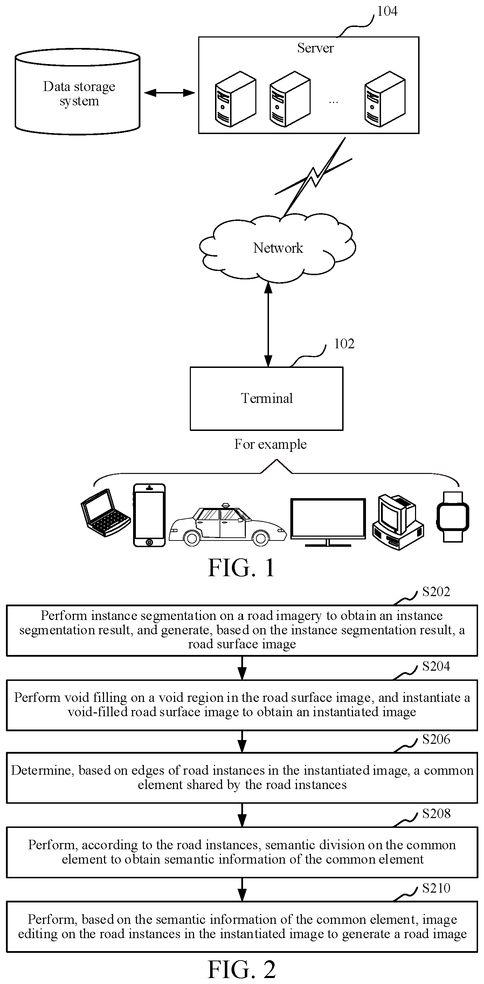

A road image generating method according to an embodiment of this application may be applied to an application environment shown in FIG. 1. A terminal 102 is in communication with a server 104 through a network. A data storage system may store data to be processed by the server 104. The data storage system may be integrated on the server 104, or placed on cloud or other servers. The road image generating method may be independently performed by the terminal 102 or the server 104, or may be cooperatively performed by the terminal 102 and the server 104. By using an example in which the method is independently performed by the terminal 102, the terminal 102 performs instance segmentation on a road imagery to obtain an instance segmentation result, and generates, based on the instance segmentation result, a road surface image; performs void filling on a void region in the road surface image, and instantiating a void-filled road surface image to obtain an instantiated image; determines, based on edges of road instances in the instantiated image, a common element shared by the road instances; performs, according to the road instances, semantic division on the common element to obtain semantic information of the common element; and performs, based on the semantic information of the common element, image editing on the road instances in the instantiated image to generate a road image.

The terminal 102 may be, but is not limited to, various desktop computers, notebook computers, smart phones, tablet computers, Internet of Things devices, and portable wearable devices. The Internet of Things device may be a smart speaker, a smart television, a smart air conditioner, a smart in-vehicle device, and the like. The portable wearable device may be a smart watch, a smart bracelet, a head-mounted device, or the like. The server 104 may be an independent physical server, or may be a server cluster or a distributed system formed by a plurality of physical servers, or may be a cloud server that provides basic cloud computing services such as cloud service, a cloud database, cloud computing, a cloud function, cloud storage, network service, cloud communication, middleware service, domain name service, security service, a content delivery network (CDN), and a big data and artificial intelligence platform. The terminal 102 and the server 104 may be connected directly or indirectly in a wired or wireless communication way, which is not limited in this application.

In an embodiment, as shown in FIG. 2, a road image generating method is provided. A case that the method is applied to a computer device in FIG. 1 is taken as an example for illustration. It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects. The method includes the following operations:
S202: Perform instance segmentation on a road imagery to obtain an instance segmentation result, and generate, based on the instance segmentation result, a road surface image.

The road imagery refers to a captured or recorded image of a road, a street, or a highway, and may specifically be acquired by using a satellite, a camera, an unmanned aerial vehicle, or other devices. The road imagery includes road information. The road information may also be referred to as a road element. The road element includes a point road element, a line road element, and a surface road element. The point road element refers to a particular point or position on a road, for example, a center point of an intersection, a position of a road sign, or a particular place on the road. The point road element may be configured for determining an intersection, marking a special position on a route, or the like. The line road element refers to a linear feature on a road, for example, a lane line, an edge line, or a center line of the road. The line road element may be configured for defining a geometrical shape and a layout of the road and a driving path of a vehicle. The surface road element refers to a closed region of a road region, and usually represents a road surface or a lane of a road. The surface road element may be configured for describing an entire shape and surface of a road. The road element is very important for many traffic and geographical information system applications, for example, may be configured for cartography, navigation, traffic monitoring, and environment perception of an autonomous driving automobile.

Instance segmentation is configured for assigning each pixel in the image to an object or instance to which the pixel belongs. Specifically, a goal of instance segmentation is to detect and segment different object instances in the image, and the object instances correspond to respective objects in the road imagery. Even if the object instances belong to the same category, the object instances also need to be distinguished from each other. For example, in one image, instance segmentation may be configured for identifying different automobiles, pedestrians, and bicycles, and assigning a unique identifier to each automobile, each pedestrian, and each bicycle. In an embodiment of this application, instance segmentation may use a deep learning method, such as a convolutional neural network (CNN), to detect and segment the object instances in the image.

Performing instance segmentation on the road imagery refers to assigning each pixel in the road imagery to a road instance to which the pixel belongs. The road instance is an actual representation of each road region or road object in the road imagery. Each road instance has a unique identifier or label, and the unique identifier or label represents a particular part in the image, which may be a segment of a road, an intersection, a lane, an isolation belt, or other road-related objects.

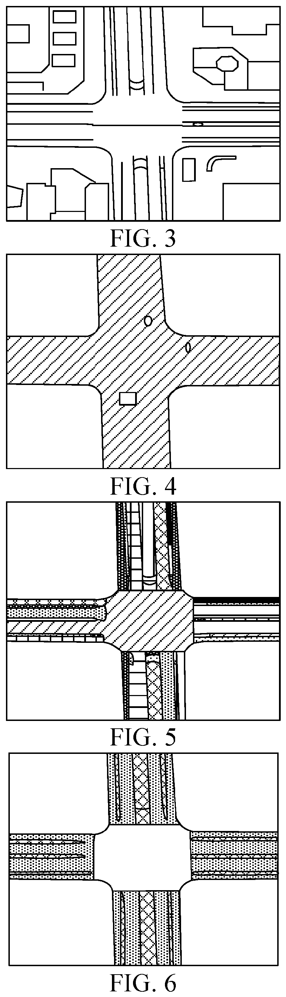

The road surface image is an image configured for representing a shape and a position of a drivable region, namely, a road surface, of a road, and may specifically be a binary image. The road region may be represented by using white or other eye-catching colors, and a non-road region may be represented by using black or other background colors. FIG. 3 shows a road imagery according to an embodiment, and FIG. 4 shows a road surface image obtained by performing instance segmentation on the road imagery. Some void regions exist in the road surface image.

Specifically, after obtaining the road imagery, the computer device may preprocess the road imagery to obtain a preprocessed road imagery; perform instance segmentation on the preprocessed road imagery to obtain an instance segmentation result; and generate, based on the instance segmentation result, the road surface image.

Preprocessing may be image denoising processing, size adjustment processing, contrast enhancement processing, or the like. The image denoising processing is configured for removing noise or interference in the image to improve image quality. The size adjustment processing is configured for adjusting a size of the image to make the image fit an input requirement of a model or an algorithm. The contrast enhancement processing is configured for enhancing contrast of the image to make details in the image more clearly visible.

S204: Perform void filling on a void region in the road surface image, and instantiating a void-filled road surface image to obtain an instantiated image.

The void region refers to a region in the road surface image that is located within a road region but is marked as a non-road region. The void region may be caused by noise, shielding, incomplete data, or other factors during image processing. The void region is represented in the road surface image as a region not covered by the road region, and usually presents black or other background colors.

Void filling refers to eliminating a missing road region in the road surface image to ensure integrity and accuracy of the road region.

Instantiation/instantiating refers to an operation of forming an independent object, and the formed independent object is referred to as an instance. The independent object refers to an object that may be operated independently. In this application, instantiation specifically refers to subdividing the road region in the void-filled road surface image into different road instances, so as to better understand and process road elements in the image. That is, each sub-region of the road region in the void-filled road surface image is assigned to a particular road instance to obtain the instantiated image, and the instantiated image may more precisely identify different parts of a road. When the void-filled road surface image is instantiated, at least one road region in the road surface image may be specifically identified, and different road regions represent different roads. Based on the identified road region, a position of each road region is positioned in the void-filled road surface image to obtain a road instance, thereby finally obtaining the instantiated image including the obtained multiple road instances.

Specifically, after obtaining the road surface image, the computer device performs void detection on the road surface image to obtain the void region in the road surface image; performs void filling on the void region in the road surface image to obtain the void-filled road surface image; and performs instantiation on (or instantiates) an original road region and a void-filled region in the void-filled road surface image, respectively, to obtain the instantiated image.

FIG. 5 shows an instantiated image. Different filled regions respectively represent different instance objects, for example, represent an identified intersection road surface. A region filled with oblique lines in a center part of FIG. 5 represents the intersection road surface, and a region filled with oblique square grids in a lower half part of FIG. 5 represents an isolation belt.

S206: Determine, based on edges of road instances in the instantiated image, a common element shared by the road instances.

The edge refers to a boundary line between an instance and other instances or the non-road region, and identifies a limit or boundary between different road instances or the road and the non-road region. The edges visualize an outline or the boundary of the road instance in the image.

The common element refers to at least one of a connection point and a connection edge shared between different road instances. The shared connection point may also be referred to as a key point, and the shared connection edge may also be referred to as a key edge. The key point and the key edge represent an association and adjacency relationship between different road instances and are configured for connecting different instances to indicate a topological relationship thereof in the image.

Specifically, after obtaining the instantiated image, the computer device may extract the edge of each road instance in the instantiated image, determine, based on the edge of each road instance, a connection relationship between the road instances in the instantiated image, and determine, based on the determined connection relationship between the road instances, the common element shared by the road instance.

S208: Perform, according to the road instances, semantic division on the common element to obtain semantic information of the common element.

Semantic division refers to a process of associating each common element with particular semantic information or a particular semantic category. That is, semantic division is a process of classifying each common element (such as the key point and the key edge) into different semantic categories or labels to indicate meanings and functions thereof in the image.

The semantic information of the common element refers to semantic classification or labels of the common element. These semantic classification or labels are configured for representing meanings and functions of each key element in the image, so as to better understand and process the road image. The semantic information of the common element includes at least one of edge-level semantic information and point-level semantic information. The edge-level semantic information refers to semantic information of the key edge, and the point-level semantic information refers to semantic information of the key point.

Specifically, after obtaining each common element in the instantiated image, for any common element, the computer device determines a road instance to which the common element belongs, and performs, based on the road instance to which the common element belongs, semantic division on the common element to obtain the semantic information of the common element.

S210: Perform, based on the semantic information of the common element, image editing on the road instances in the instantiated image to generate a road image.

Image editing may specifically be semantics-based visualization processing, which may enrich the information amount of the image and improve readability of the image. The semantics-based visualization processing may specifically be color marking processing, line width and linear marking processing, and the like. The color marking processing refers to editing, according to semantics, different road instances and different parts of the road instance with different colors to distinguish different road elements. The line width and linear marking processing refers to performing, according to semantics, thickness and linear marking on lines on a road by using lines for different parts of edges of different road instances to distinguish different types of road markings.

Specifically, after obtaining the semantic information of each common element, the computer device performs, based on the semantic information of each common element, semantic optimization on the corresponding road instance to obtain a semantically optimized road instance and generates, based on the semantically optimized road instance, the road image.

FIG. 6 shows a road image according to an embodiment. Different filled regions in FIG. 6 represent different road instances, and the same filling pattern represents the same semantic meaning, that is, the road instances are in the same category. For example, a region filled with oblique square grids in an upper half part of FIG. 6 represents an isolation belt, and a region filled with oblique square grids in a lower half part of FIG. 6 represents an isolation belt. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

According to the foregoing road image generating method, instance segmentation is performed on the road imagery to obtain the road surface image; void filling is performed on the void region in the road surface image, and instantiation is performed on the void-filled road surface image to obtain the instantiated image; the common element shared by the road instances is determined based on the edges of the road instances in the instantiated image; semantic division is performed on the common element according to the road instances to obtain the semantic information of the common element; and image editing is performed on the road instances in the instantiated image based on the semantic information of the common element to generate the road image. By means of void filling and instantiation processing, voids in a reconstructed image caused by a shielding problem of the road imagery may be avoided, integrity and continuity of each road instance (for example, a road segment road surface and an intersection road surface) in the finally generated road image are ensured, and accuracy of the road image is improved. A relationship between adjacent instances may be determined by determining the common element and performing semantic division. Further, with reference to image editing based on the semantic information, the finally generated road image may include more accurate and richer semantic information, so that the information richness and accuracy of the road image are improved.

In an embodiment, a process in which the computer device performs instance segmentation on the road imagery to obtain the instance segmentation result and generates, based on the instance segmentation result, the road surface image includes the following operations: segment the road imagery to obtain different road instances; perform region fusion on the road instances to obtain a road surface region fused with at least one road instance; and generate the road surface image by using the road surface region fused with at least one road instance as a foreground.

Regional fusion refers to merging road surface regions corresponding to adjacent or overlapping road instances into a larger continuous region.

Specifically, after obtaining the road imagery, the computer device performs feature extraction on the road imagery by using a pretrained segmentation model to obtain a road feature, and performs, based on the road feature, instance segmentation processing to obtain the instance segmentation result. The instance segmentation result includes different segmented road instances, semantic categories corresponding to the road instances, and instance identifiers corresponding to the road instances. Each road instance corresponds to one sub-region of the road region. After each road instance is obtained, sub-regions corresponding to the road instances are successively merged according to positions thereof in the road imagery, until all the road instances are merged completely, to obtain a road surface region. The road surface region obtained through fusing is used as the foreground, and the background is set to a background color such as black or other background colors, to generate the road surface image.

For example, instance segmentation is performed on the road imagery to obtain a semantic mask of each road instance, the semantic masks are fused to obtain a merged mask, and the merged mask is used as foreground semantics to generate the road surface image.

In the foregoing embodiment, the computer device segments the road imagery to obtain different road instances; performs region fusion on the road instances to obtain the road surface region fused with at least one road instance; and uses the road surface region fused with at least one road instance as the foreground to generate the road surface image, so that the road surface image including a basic road surface region may be obtained, thereby providing a basis for subsequent generation of the road image.

In an embodiment, a process in which the computer device performs void filling on the void region in the road surface image includes the following operations: perform void detection on the road surface image to obtain candidate void regions; determine a void region satisfying a filling condition from the candidate void regions; and perform expansion processing on an adjacent road surface region of the void region in the road surface image to obtain the void-filled road surface image.

Void detection refers to identifying and positioning the void region in the road surface image. The void region refers to a region in the road surface image that is located within a road region but is marked as a non-road region. The void region may be caused by noise, shielding, incomplete data, or other factors during image processing. The void region is represented in the road surface image as a region not covered by the road region, and usually presents black or other background colors.

The candidate void region refers to a region identified as a potential void or a region that needs to be filled. These regions are identified as possible candidates at the void detection stage, but need to be further verified whether they really need to be filled.

The filling condition refers to a condition configured for determining whether filling needs to be performed on the candidate void region, and may specifically include at least one of a void size condition, a void shape condition, a void position condition, and a context information condition. The void size condition is configured for determining a minimum and maximum allowed size of a needed void. An excessively small void may be considered as noise and does not need to be filled, and an excessively large void may not be a real void and therefore does not need to be filled. The void shape condition is configured for determining a shape of a void that needs to be filled, for example, the void needs to be filled may be limited to be a rectangular shape, a circular shape, or other regular shapes. The void position condition is configured for determining a position of a void that needs to be filled. For example, if the void is located in a non-core region of a road or located on a non-main path to which the vehicle travels, the void does not need to be filled. The context information condition is configured for limiting a relationship between the void needs to be filled and a surrounding road region. For example, the void is filled only when sufficient context information indicates that the void is appropriate.

Expansion processing is configured for expanding the road region to surrounding pixels, so as to fill the void region.

Specifically, after obtaining the road surface image, the computer device may perform connected domain analysis on the road surface image to obtain a connected domain analysis result; determine, based on the connected domain analysis result, the candidate void regions; and determine whether each candidate void region satisfies the filling condition, to select the void region satisfying the filling condition from the candidate void regions to perform void filling. When performing void filling, the computer device may determine the adjacent road surface region corresponding to the void region; determine, based on the determined positional relationship and size relationship between the adjacent road surface region and the void region, an expansion parameter; and perform, based on the expansion parameter, expansion processing on the adjacent road surface region, so that the pixels of the adjacent road surface region are expanded to the void region, so as to fill the void region, thereby obtaining the void-filled road surface image.

For example, after the merged mask is used as the foreground semantics to generate the road surface image, expansion processing may be performed on the merged mask, so as to fill a void image in the road surface image, thereby obtaining the void-filled road surface image.

In the foregoing embodiment, the computer device performs void detection on the road surface image to obtain the candidate void regions; determines the void region satisfying the filling condition from the candidate void region; and performs expansion processing on the adjacent road surface region of the void region in the road surface image to obtain the void-filled road surface image, thereby improving accuracy of shape and position information of the road region in the road surface image. Further, the road image generated subsequently based on the void-filled road surface image better conforms to an actual road condition, thereby improving accuracy of the road image.

In an embodiment, the void-filled road surface image includes a void-filled region and a complementary road surface region (or alternatively termed as a rest/remaining road surface region). A process in which the computer device performs instantiation on the void-filled road surface image to obtain the instantiated image includes the following operations: perform instantiation on the complementary road surface region to obtain an initial instantiated image; and perform instantiation on the void-filled region in the initial instantiated image to obtain the instantiated image.

The void-filled region refers to a road surface region obtained after the void region is filled. The complementary road surface region is an original road surface region obtained by performing region fusion on the road instances in the road surface image.

Specifically, after obtaining the void-filled road surface image, the computer device may perform, based on an instance identification result of an original road imagery, instantiation for complementary road surface region in the road surface image to obtain the initial instantiated image, and the computer device may perform, according to a size feature of the void-filled region, instantiation for the void-filled region in the initial instantiated image to obtain the instantiated image.

In an embodiment, each void-filled region may be divided into a first void-filled region and a second void-filled region according to a size feature thereof. The first void-filled region is a void-filled region of which a void size reaches a size threshold, and the second void-filled region is a void-filled region of which a void size does not reach the size threshold. For example, a void-filled region of which a void area reaches an area threshold is determined as the first void-filled region, and a void-filled region of which a void area does not reach the area threshold is determined as the second void-filled region. The first void-filled region may be instantiated according to a first instantiation mode, and the second void-filled region may be instantiated according to a second instantiation mode.

In the foregoing embodiment, the computer device performs instantiation on the complementary road surface region to obtain the initial instantiated image. The computer device performs instantiation on the void-filled region in the initial instantiated image to obtain the instantiated image, so that different sub-regions of the road surface region may be divided into different road instances, so as to better model and process the road elements in the road imagery, thereby improving accuracy of the road image.

In an embodiment, a process in which the computer device performs instantiation on the complementary road surface region to obtain the initial instantiated image includes the following operations: acquire the instance segmentation result obtained by performing instance segmentation on the road imagery, where the instance segmentation result includes at least two road instances and corresponding confidence coefficients; determine, for the sub-region of each road surface region in the void-filled road surface image, at least one candidate road instance matching a shape and a position of the sub-region from the at least two road instances; select, in response to that a number of the candidate road instances is at least two, a target road instance with a confidence coefficient satisfying a confidence coefficient condition from the candidate road instances; and fill, based on the target road instance, the sub-region to obtain the initial instantiated image. The confidence coefficient condition may be a confidence coefficient threshold, and the confidence coefficient satisfying the confidence coefficient condition may refer to that the confidence coefficient is equal to or greater than the confidence coefficient threshold.

The confidence coefficient is configured for representing credibility of identifying a corresponding road instance. A high confidence coefficient represents that an identification result is very reliable, and a low confidence coefficient represents that there is uncertainty in the identification result.

Specifically, the computer device determines, for the sub-region of each road surface region in the void-filled road surface image, a matching degree between each road instance and a shape and a position of the sub-region; and selects, according to the matching degree, the candidate road instance matching the sub-region from the road instances. In response to that the number of the candidate road instance is one, the candidate road instance is directly determined as the target road instance and the sub-region is filled based on the target road instance. In response to that the number of the candidate road instances is at least two, the target road instance with the confidence coefficient satisfying the confidence coefficient condition is selected from the candidate road instances, the sub-region is filled based on the target road instance, and after all the road instances obtained through segmentation are filled to the complementary road region, the initial instantiated image is obtained.

In an embodiment of this application, the sub-region is filled based on the target road instance may specifically be that the sub-region is filled based on an instance identifier of the target road instance. For example, different target road instances use different filling patterns, and the sub-region is filled with a filling pattern corresponding to the instance identifier of the target road instance, so as to obtain a filling result shown in FIG. 5. In addition, the sub-region may be filled based on the semantic category of the target road instance. For example, a corresponding filling pattern is determined based on the semantic category of the target road instance, and the corresponding sub-region is filled based on the determined filling pattern.

In the foregoing embodiment, when the computer device performs, based on the instance identification result of the original road imagery, instantiation on the complementary road surface region, the target road instance matching the shape and the position of any sub-region is selected to fill the sub-region, so as to ensure that the finally generated instantiated image retains road instance information in the original road imagery; and the target road instance with the confidence coefficient satisfying the confidence coefficient condition is selected to fill the sub-region, so as to improve filling accuracy, and further improve consistency between the road instance in the instantiated image and the road instance in the original road imagery, thereby improving accuracy of a finally obtained road image.

In an embodiment, the void-filled region includes the first void-filled region and the second void-filled region. An area of the first void-filled region is greater than an area of the second void-filled region. The initial instantiated image may also be referred to as a first instantiated image. A process in which the computer device performs instantiation on the void-filled region in the initial instantiated image to obtain the instantiated image includes the following operations: determine, based on an adjacent instance of the first void-filled region, an instance category; generate, in the first instantiated image and according to the instance category, a new road instance in the first void-filled region to obtain a second instantiated image; determine a road instance to which the second void-filled region belongs; and perform, in the second instantiated image and based on the road instance to which the second void-filled region belongs, instantiation on the second void-filled region to obtain the instantiated image.

The adjacent instance is a road instance in the first instantiated image that is adjacent to the first void-filled region. The determined instance category is a semantic category of a possible road instance of the first void-filled region. For example, if road instances adjacent to a periphery of a long-strip-shaped first void-filled region are instances of a road segment, an intersection, or the like, it may be determined that the instance category corresponding to the first void-filled region is an isolation belt.

Specifically, after obtaining the first instantiated image, for any first void-filled region in the first instantiated image, the computer device acquires an adjacent instance of the first void-filled region; determines, based on the semantic category of the adjacent instance, the instance category corresponding to the first void-filled region by using a pretrained machine learning model; generates, according to the determined instance category, the new road instance in the first void-filled region; and obtains the second instantiated image after completing instantiation on each first void-filled region. After obtaining the second instantiated image, the computer device determines an adjacent instance of the second void-filled region for the second void-filled region in the second instantiated image; selects, according to a preset attribution rule, the road instance to which the second void-filled region may belong from the adjacent instances; and attributes the second void region into the road instance. Specifically, the second void-filled region may be filled based on semantics of the road instance to which the second void-filled region belongs, and a common boundary line between the second void-filled region and the road instance to which the second void-filled region belongs is eliminated, thereby assigning the second void region to the corresponding road instance. After instantiation processing on the whole second void-filled region is completed, the second instantiated image is obtained.

The attribution rule may be preset based on attributes such as a type, a position, a shape, and a color of the adjacent instance.

In the foregoing embodiment, the computer device determines, based on the adjacent instance of the first void-filled region, the instance category; generates, in the first instantiated image and according to the instance category, the new road instance in the first void-filled region to obtain the second instantiated image; determines the road instance to which the second void-filled region belongs; and performs, in the second instantiated image and based on the road instance to which the second void-filled region belongs, instantiation on the second void-filled region to obtain the instantiated image, so that accurate instantiation processing may be performed on the void-filled region, thereby improving consistency between the road instance in the instantiated image and the road instance in the original road imagery, and further improving accuracy of the finally obtained road image.

In an embodiment, that the computer device determines, based on the edges of the road instances in the instantiated image, the common element shared by the road instances includes: perform edge detection on the instantiated image to obtain the edges of the road instances in the instantiated image; determine, based on the edges, a road instance framework in the instantiated image; and determine, based on a connection relationship in the road instance framework, the common element shared by the road instances.

Edge detection is configured for identifying a contour of each road instance in the instantiated image, and the obtained edge may specifically be an inner edge of the road instance. The road instance framework is a main structural representation of the road instance extracted from the road image, and is essentially a series of line segments connected to each other, and mutual connection of the line segments represents a relationship between the road instances.

The common element includes at least one of the key point and the key edge. The key point is usually a special position in a hanger, such as a cross point, and the key edge is a line segment connecting the key points.

Specifically, after obtaining the instantiated image, the computer device may perform edge detection on the instantiated image by using a preset edge detection algorithm to obtain the edges of the road instances in the instantiated image; process the edge by using a semantic framework extraction algorithm to obtain the road instance frameworks in the instantiated image; analyze, based on the connection relationship in the road instance frameworks, the road instance framework to identify the key point in the road instance framework; and identify, according to the connection relationship between the key points, the key edge to obtain the common element of the road instances.

The preset edge detection algorithm may be a Sobel operator, Canny edge detection, a Laplace operator, or an edge detection filter. The semantic framework extraction algorithm is configured for extracting a framework structure having semantic information from the instantiated image.

In the foregoing embodiment, the computer device performs edge detection on the instantiated image to obtain the edges of the road instances in the instantiated image; determines, based on the edges, the road instance framework in the instantiated image; and determines, based on the connection relationship in the road instance framework, the common element shared by the road instances, so that the common element may be automatically identified by means of edge detection and framework analysis, thereby improving identification accuracy and efficiency of the common element. In this way, the semantic information of the common element may be further determined subsequently as a road image, thereby improving accuracy of the road image and enriching the information amount of a road identification image.

In an embodiment, the common element includes the key edge, the semantic information of the common element includes edge-level semantic information, and a process in which the computer device performs, according to the road instances, semantic division on the common element to obtain the semantic information of the common element includes the following operations: determine a target road instance to which the key edge belongs; and perform, based on semantic information of the target road instance, semantic division on the key edge to obtain the edge-level semantic information.

The target road instance is a road instance including the key edge. In a road scenario, the key edge is usually located at an intersection between different road instances, and the key edge is associated with the target road instance to which the key edge belongs, so that accurate semantic information of the key edge may be represented.

Specifically, for any key edge, the computer device may analyze a relationship between road instances connected by the key edge; determine, according to a connection relationship analysis result, the target road instance to which the key edge belongs; acquire the semantic information of the target road instance; and perform, based on the semantic information of the target road instance, semantic division on the key edge to obtain the edge-level semantic information of the key edge.

In the foregoing embodiment, the computer device determines the target road instance to which the key edge belongs, and then performs, based on the semantic information of the target road instance, semantic division on the key edge to obtain the edge-level semantic information, thereby associating the key edge in the image with the target road instance and endowing semantic information to the key edge in the image, so as to add the obtained edge-level semantic information to the road image subsequently, thereby improving the information amount of the road image.

In an embodiment, the common element includes the key point, the semantic information of the common element includes point-level semantic information, and a process in which the computer device performs, according to the road instances, semantic division on the common element to obtain the semantic information of the common element includes the following operations: determine a target road instance to which the key point belongs; and perform, based on the semantic information of the target road instance, semantic division on the key point to obtain the point-level semantic information.

The target road instance is a road instance including the key point. In a road scenario, the key point is usually located at an intersection between different road instances, and the key point is associated with the target road instance to which the key point belongs, so that accurate semantic information of the key point may be represented.

Specifically, for any key point, the computer device may analyze a relationship between road instances connected by the key point; determine, according to a connection relationship analysis result, the target road instance to which the key point belongs; acquire the semantic information of the target road instance; and perform, based on the semantic information of the target road instance, semantic division on the key point to obtain the point-level semantic information of the key point.

In the foregoing embodiment, the computer device determines the target road instance to which the key point belongs, and then performs, based on the semantic information of the target road instance, semantic division on the key point to obtain the point-level semantic information, thereby associating the key point in the image with the target road instance and endowing the semantic information to the key point in the image, so as to add the obtained point-level semantic information to the road image subsequently, thereby improving the information amount of the road image.

In an embodiment, the computer device may further determine, based on the semantic information of the target road instance, a processing mode of the key edge; perform, according to the processing mode, optimization processing on the key edge to obtain a processed key edge; and perform, based on the semantic information of the target road instance, semantic division on the processed key edge to obtain the edge-level semantic information.

The processing mode refers to an optimization mode of the key edge, and may specifically be parameterization processing or smoothing processing. The parameterization processing refers to expressing a shape of the key edge by using parameters to optimize the shape of the key edge. For example, a key edge of a curve shape is modeled by using a curve function, so that the curve shape is more regular. The smoothing processing refers to optimizing the shape of the key edge by reducing irregularity of the key edge, for example, making a zigzag key edge smoother.

Specifically, the computer device determines, based on the semantic information of the target road instance and the shape information of the key edge, the processing mode of the key edge; performs, according to the processing mode, optimization processing on the key edge to obtain the processed key edge; and performs, based on the semantic information of the target road instance, semantic division on the processed key edge to obtain the edge-level semantic information.

A processing mode library may be preconfigured. The processing mode library includes various processing modes and corresponding semantic conditions and shape conditions. The computer device may match the semantic information of the target road instance and the shape information of the key edge with the semantic condition and the shape condition; select, based on a matching result, a matched processing mode from the processing mode library; and perform, according to the selected processing mode, optimization processing on the key edge.

For example, if a target road segment instance to which certain key edge belongs is an intersection and non-road segment isolated, and a shape of the key edge is approximate to an arc, it may be determined that the processing mode of the key edge is parameterization processing. Specifically, parameterization modeling may be performed on a curve of the key edge, that is, the curve of the key edge is represented as a parameter equation of an arc, and a smooth radian curve is generated according to the parameter equation. The smooth radian curve is namely an optimized key edge. A shape of the optimized key edge is approximate to the shape of the original key edge, but is smoother. If a target road segment instance to which certain key edge belongs is a road segment and isolated, and a shape of the key edge is a feature including a zigzag shape, if the key edge is in a zigzag shape at a corner, it may be determined that the processing mode of the key edge is smoothing processing. Specifically, the shape of the key edge may be processed to reduce a quantity and sharpness of sawteeth or corners, so as to obtain a smoothed key edge. The smoothed key edge is an optimized key edge. Compared with the original key edge, the optimized key edge is smoother and more regular.

In the foregoing embodiment, the computer device determines, based on the semantic information of the target road instance, the processing mode of the key edge; and performs, according to the processing mode, optimization processing on the key edge to obtain the processed key edge. A suitable processing mode is selected according to different semantic information, which may improve a visual effect of the key edge, for example, reduce sawteeth, corners, and irregularities, so that the road instance is smoother and more natural in the image, thereby improving a visual effect. In addition, the processed key edge may better reflect a feature of an actual road, thereby improving accuracy of a road image generated based on the processed key edge.

In an embodiment, a process in which the computer device performs, based on the semantic information of the common element, image editing on the road instances in the instantiated image to generate the road image includes the following operations: add, based on the semantic information of the common element, a semantic label to each road instance in the instantiated image to obtain a semantically optimized road instance; and generate, based on the semantically optimized road instance, the road image.

Specifically, after obtaining the edge-level semantic information of the key edge and the point-level semantic information of the key point, the computer device may associate, for any key edge of the road instance, the semantic label corresponding to the edge-level semantic information of the key edge with the key edge, and associate, for any key point of the road instance, the semantic label corresponding to the point-level semantic information of the key point with the key point to obtain the semantically optimized road instance. During image reconstruction, a corresponding semantically optimized road instance is drawn for a semantic label associated with each element of a point, a line, and a surface of each semantically optimized road instance, to generate the road image.

In the foregoing embodiment, the computer device adds, based on the semantic information of the common element, the semantic label to each road instance in the instantiated image to obtain the semantically optimized road instance, so that different elements of the road instance are associated with specific semantic information. Further, the road image is generated based on the semantically optimized road instance, and includes richer information, thereby improving the information amount and accuracy of the road image, and making content of the road image easier to understand and analyze. In addition, when the road image is applied to the fields such as road planning, autonomous driving, and city planning, a user may understand and analyze a road structure and elements in the image more easily.

In an embodiment, after generating the road image, the computer device may further acquire a road element to be added; determine an element addition position of the road element to be added in the road image; and draw, according to semantic information of the road element to be added, the road element to be added at the element addition position to obtain an element-optimized road image.

The road element to be added refers to an additional element needing to be added to the road image. These elements are related to road scenarios, and may specifically be a new road segment, a road sign and a traffic sign, a pedestrian and a vehicle, a traffic light and a signal, a road marking and a marginal strip, a road surface condition, a building, an environment, and the like. Adding a new road segment refers to adding a new road segment to the road image or performing road extension in the road image, to extend or connect an existing road. Adding a road sign and a traffic sign refers to adding a road sign, a traffic sign, an indicator, and the like to the road image, to identify information, a rule, and a road condition on the road. Adding a pedestrian and a vehicle refers to adding traffic participants such as pedestrians, bicycles, automobiles, and buses to the road image to simulate a traffic flow and behavior. Adding a traffic light and a signal refers to adding a traffic light, a pedestrian signal, and the like at an intersection or a road segment in the road image, to simulate traffic control and a traffic flow. Adding a road marking and a marginal strip refers to drawing a road marking, a center line, a marginal strip, and the like in the road image, to enhance identifiability and a sense of reality of a road. Adding a road surface condition refers to adding road surface conditions such as rain water, accumulated water, and ice and snow to the road image, to simulate different weather and road conditions. Adding a building and an environment refers to adding environment elements such as a building, a tree, a light post, and an advertising sign around the road in the road image, to provide a more realistic scenario.

Specifically, the computer device may obtain the element information of the road element to be added, which may specifically include information such as semantic information, a shape, and a material of the road element to be added; determine, according to actual geographic data or a scenario requirement, the element addition position of the road element to be added; and then use an image processing tool to draw, according to the semantic information of the road element to be added, the road element to be added at the element addition position to obtain the element-optimized road image.

In the foregoing embodiment, the computer device obtains the road element to be added; then determines the element addition position of the road element to be added in the road image; and draws, according to the semantic information of the road element to be added, the road element to be added at the element addition position to obtain the element-optimized road image, so that the information amount in the road image may be increased, and the element-optimized road image is closer to a real road scenario.

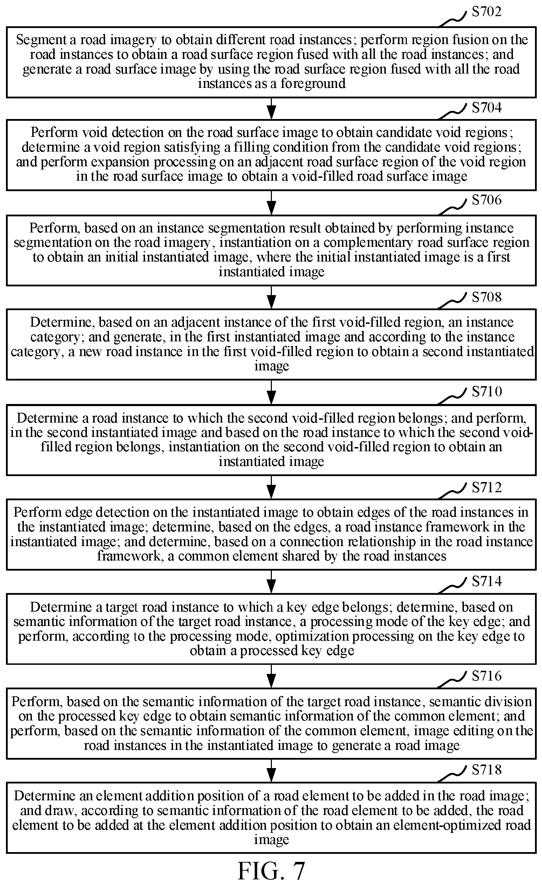

In an embodiment, as shown in FIG. 7, a road image generating method is further provided. A case that the method is applied to the computer device in FIG. 1 is taken as an example for illustration. The method includes the following operations:
S702: Segment a road imagery to obtain different road instances; perform region fusion on road instances to obtain a road surface region fused with all the road instances; and generate a road surface image by using the road surface region fused with all the road instances as a foreground.
S704: Perform void detection on the road surface image to obtain candidate void regions; determine a void region satisfying a filling condition from the candidate void regions; and perform expansion processing on an adjacent road surface region of the void region in the road surface image to obtain a void-filled road surface image.

The void-filled road surface image includes a void-filled region and a complementary road surface region. The void-filled region includes a first void-filled region and a second void-filled region, and an area of the first void-filled region is greater than an area of the second void-filled region.

S706: Perform, based on an instance segmentation result obtained by performing instance segmentation on the road imagery, instantiation on the complementary road surface region to obtain an initial instantiated image, where the initial instantiated image is a first instantiated image.

S708: Determine, based on an adjacent instance of the first void-filled region, an instance category; and generate, in the first instantiated image and according to the instance category, a new road instance in the first void-filled region to obtain a second instantiated image.

S710: Determine a road instance to which the second void-filled region belongs; and perform, in the second instantiated image and based on the road instance to which the second void-filled region belongs, instantiation on the second void-filled region to obtain an instantiated image.

S712: Perform edge detection on the instantiated image to obtain edges of the road instances in the instantiated image; determine, based on the edges, a road instance framework in the instantiated image; and determine, based on a connection relationship in the road instance framework, a common element shared by the road instances.

S714: Determine a target road instance to which a key edge belongs; determine, based on semantic information of the target road instance, a processing mode of the key edge; and perform, according to the processing mode, optimization processing on the key edge to obtain a processed key edge.

S716: Perform, based on the semantic information of the target road instance, semantic division on the processed key edge to obtain semantic information of the common element; and perform, based on the semantic information of the common element, image editing on the road instances in the instantiated image to generate a road image.

S718: Determine an element addition position of a road element to be added in the road image; and draw, according to semantic information of the road element to be added, the road element to be added at the element addition position to obtain an element-optimized road image.

This application further provides an application scenario which may specifically be applied to the foregoing road image generating method, and the method specifically includes the following operations:

### Operation 1: Acquire an original satellite imagery perception result.

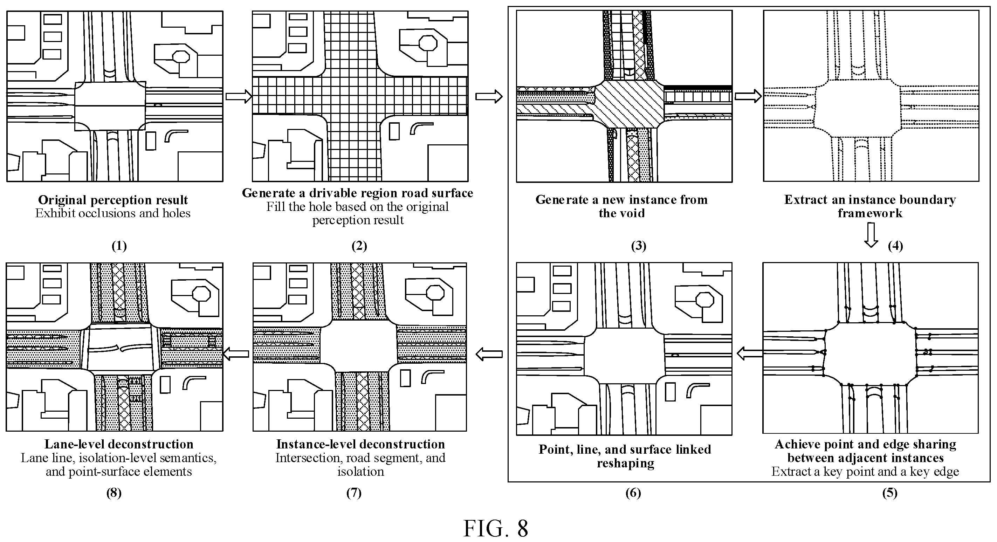

Instance segmentation processing is performed on a satellite imagery of a road by using an instance segmentation algorithm to obtain an instance segmentation result. The instance segmentation result may also be referred to as a satellite imagery perception result. The instance segmentation result includes each road instance obtained through segmentation, such as an intersection, a road segment, an isolation belt, a diversion zone, a main and side road entrance and exit, a U-turn entrance, and a roundabout. If a road image is directly generated based on the instance segmentation result, as shown in (1) of FIG. 8, an obtained road image may have problems of occlusions, misalignment, or voids, a relationship between adjacent instances cannot be known, and a morphological structure of the instance cannot be ensured to be consistent with an actual case.

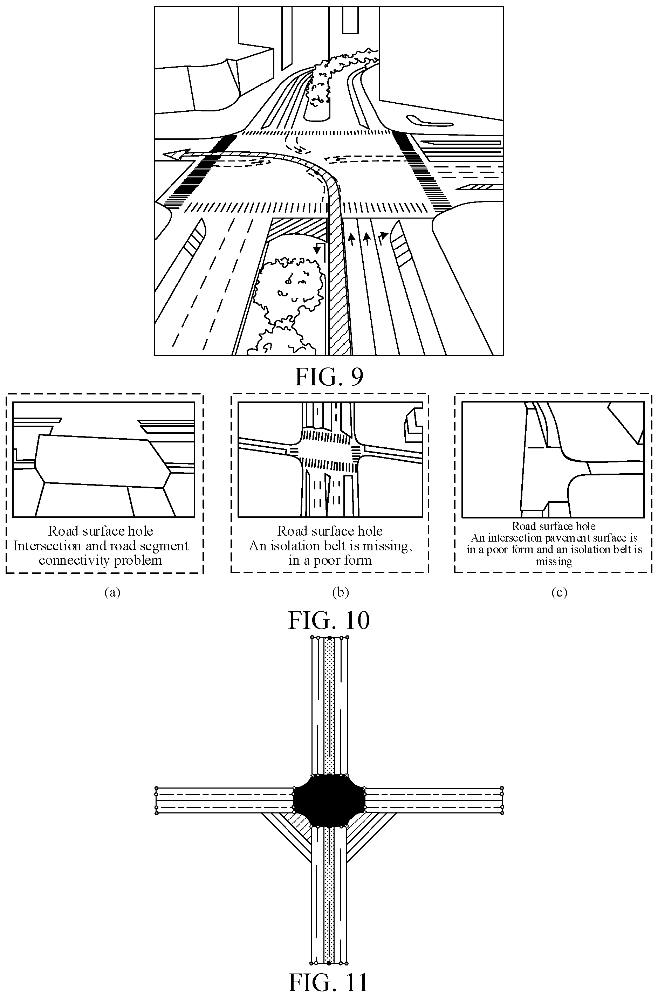

For example, image reconstruction is performed on a large image of an intersection shown in FIG. 9 directly based on the instance segmentation result. Problems of a hole (that is, a void) and poor connectivity shown in (a) of FIG. 10 may occur, problems of a hole, a missing isolation belt, and a poor morphology shown in (b) of FIG. 10 may also occur, and problems of a hole, a poor morphology, and a missing isolation belt shown in (c) of FIG. 10 may further occur.

### Operation 2: Generate a road surface of a void-filled drivable region.

All the road instances identified in operation 1 are fused into a mask image, and the mask image is changed into a foreground and background semantic mask to obtain a road surface image including a road region. Candidate void regions in the road surface image are detected. A void region satisfying conditions is selected from the candidate void regions, and an expansion and corrosion operation is performed on the foreground mask in the road surface image to fill the void region in the road surface image to obtain a void-filled road surface image. A road surface region in the road surface image shown in (2) of FIG. 8 has no voids.

The drivable region in the void-filled road surface image generated in this operation is an entire road surface, which is an entire data base, so as to subsequently generate the road image.

### Operation 3: Perform instantiation on the road surface.

Based on the instance segmentation result obtained in operation 1, instance filling is performed on an original road surface region in the road surface image, that is, assigning instance semantics to the covering road surface; a new instance generating operation is performed on a large-area region in the void-filled region in the road surface image, and a small-area region in the void-filled region is attributed to other instances nearby, so as to implement instance filling on an entire road surface region of the road surface image, that is, the road surface is fully filled with instance semantic pixels without leaving any gaps, so as to obtain an instantiated image. As shown in (3) of FIG. 8, the entire road surface region is entirely filled with instances.

### Operation 4: Extract an instance edge.

Edge extraction is performed on the instantiated image in operation 3. The extracted edge may be an inner edge of the instance. As shown in (4) of FIG. 8, all edges of the instances are generated, an edge thickness is 2, and there is no common edge between instances, nor is there a common point between multiple instances. Therefore, the edge in operation 4 is only a basic edge.

### Operation 5: Extract a common element between the instances.

A semantic framework edge extraction algorithm is used, a communication relationship is determined based on the extracted edges, and key points and key edges of the full instances are solved based on the communication relationship. As shown in (5) of FIG. 8, black dots in the figure are key points, and line segments connecting the black dots are key edges. The key points and the key edges are connected to form the instances (an intersection, a road segment, an isolation belt, and the like).

### Operation 6: Perform optimization processing of the common element.

Processing such as smooth fitting is performed on the key edge according to instance semantics. For example, an edge of an intersection is parametrically expressed, to generate a smooth radian, and smoothing or straightening processing is performed on edge lines of some road segment isolation, as shown in (6) of FIG. 8, to make each instance more beautiful and well-formed. Each time one key edge is adjusted, which actually means that edges of two instances are adjusted, and a plurality of instances may be modified through synchronous linkage.

### Operation 7: Deconstruct instance edge attributes.

Instantiated and parametric expression parsing is performed on each instance, and instantiation of an intersection and a road segment is defined as follows: for example, the intersection is divided into an intersection pavement surface, a cross point, an intersection boundary, and a road surface entry and exit edge; and instances such as an intersection and a road segment are parsed to generate a vectorized semantic intersection definition-an intersection pavement surface, an intersection edge, an intersection entry and exit edge, and an endpoint.

Semantic division is performed according to an instance to which the common element belongs, for example, a key edge of an intersection and a road segment is a road surface entry and exit edge, and for example, a common edge of an intersection instance and a non-drivable region is a road surface boundary; and the key points are connection points of key edges of different attributes, and a combination of the key points and the key edges is an entire intersection pavement surface.

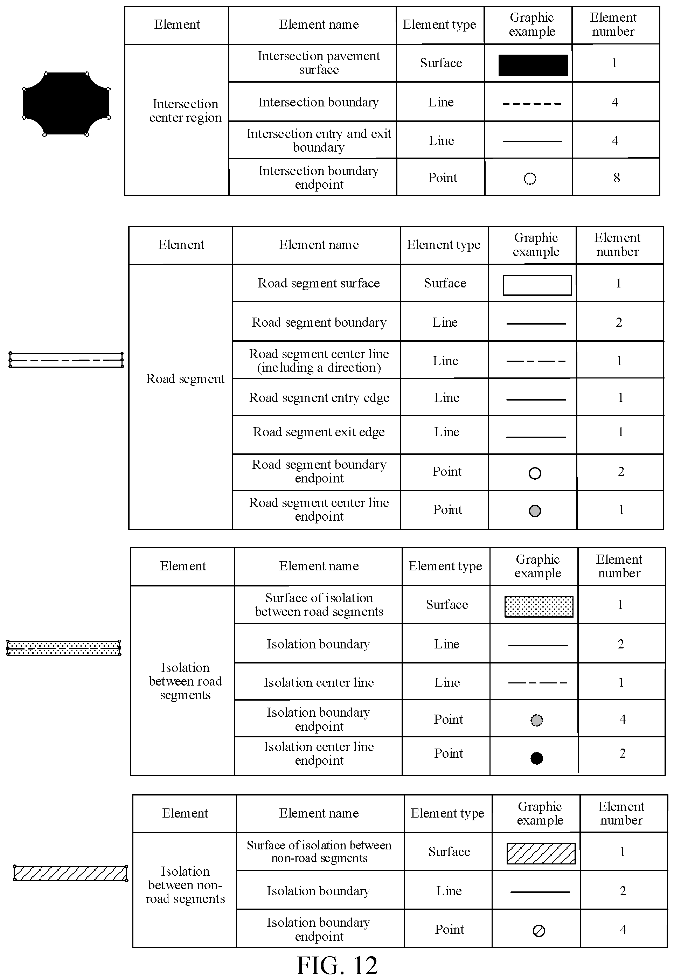

The road image is generated according to a semantic division result. The obtained road image is shown in (7) of FIG. 8. Elements in the figure are filled with semantics, that is, each point, each line, and each surface in (7) of FIG. 8 have actual semantics. Specifically, refer to FIG. 11 and FIG. 12. FIG. 11 shows a road image, and actual semantics of a point, each line, and each surface in FIG. 11 are shown in FIG. 12.

### Operation 8: Fill a new element.

Based on instantiation of the intersection and the road segment generated in the previous seven operations, elements of a lane line, a stop line, a diversion zone, an isolation belt, and a ground vehicle line are added to improve information about this road surface, thereby obtaining an element-optimized road image, as shown in (8) of FIG. 8.

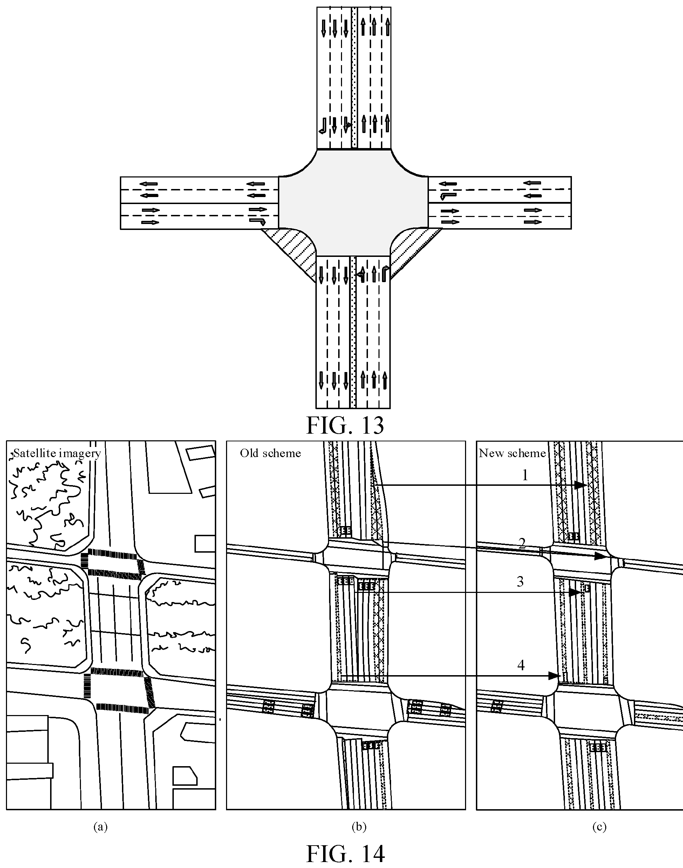

This application further provides an application scenario. The application scenario may specifically be a map scenario. After a map is applied to obtain a road imagery, the road image generating method provided in this application is automatically used, so that 6-level multi-lane data may be automatically constructed to obtain a road image, and a lane line and related attributes thereof are synchronously outputted in the road image. In addition, automation of the large image of the intersection may also be implemented. Fully automatic data construction of the large image of the intersection is completed based on structured intersection and road segment data and with reference to basic information of spatial data (sd), a requirement for rendering the large image of the intersection is satisfied, and a new generation of real images at the intersection are rendered. Specifically, the computer device may automatically acquire a road imagery of an intersection; perform instance segmentation processing on the road imagery; generate, based on an instance segmentation result, a road surface image; fill a void region (for example, a void formed due to a shielding problem in the original road imagery) in the road surface image to obtain a void-filled road surface image; perform instantiation on an original road region and the void-filled region in a void-filled road surface image, respectively; extract key points and key edges of road instances in an instantiated image; perform optimization processing on the key edges to determine semantic information of the key points and the key edges; and perform, based on the semantic information of each key point and each key edge, image editing on the road instances in the instantiated image to generate the road image, thereby realizing automatic generation of the road image. To be better applied to the fields such as lane-level navigation, autonomous driving, road planning, and city planning, road elements may further be added to the road image, for example, elements such as road signs, traffic signs, road markings, marginal strips, road surface conditions, buildings, and environments are added, so as to obtain an element-optimized road image (for example, the large image of the intersection, with reference to a schematic diagram of a reconstruction result of the large image of the intersection shown in FIG. 13). By using the element-optimized road image as a map image in an electronic map, on one hand, a user may understand and analyze a road structure and elements more easily, and on the other hand, when lane-level navigation and autonomous driving are performed, lane-level path planning may be implemented based on the map image, and lane-level navigation guidance is displayed in the map image when lane-level navigation is performed. In addition, in the fields such as road planning and city planning, a road image may help visualize a road network or a city environment, so that a planner may simulate and evaluate, based on the road image, data such as a road network, land utilization, and traffic flow, to develop a proper planning solution.

In addition, image reconstruction is further performed on the satellite imagery shown in (a) of FIG. 14 by using the road image generating method provided in this application and a conventional reconstruction method, a mapping effect of a conventional solution is shown in (b) of FIG. 14 and a mapping effect of the road image generating method provided in this application is shown in (c) of FIG. 14. It can be learned from the figures that the mapping effect of the road image generating method provided in this application is better, for example, each road instance is more complete and regular.

Although the operations are displayed sequentially according to instructions of arrows in the flowcharts of the foregoing embodiments, the operations are not necessarily executed sequentially in an order indicated by the arrows. Unless otherwise explicitly specified herein, an execution sequence of the operations is not strictly limited, and the operations may be performed in other sequences. Moreover, at least some operations in the flowchart involved in each of the foregoing embodiments may include a plurality of operations or a plurality of stages. The operations or stages are not necessarily executed completely at the same moment and may be executed at different moments. The operations or stages are not necessarily executed sequentially, and may be executed alternately with other operations or at least some operations or stages of other operations.

Based on the same inventive concept, an embodiment of this application further provides a road image generating apparatus for implementing the foregoing involved road image generating method. The implementation solution to the problem provided by the apparatus is similar to that described in the foregoing method, so refer to definitions of the above road image generating method for specific definitions of one or more road image generating apparatus embodiments provided below, which will not be repeated herein.

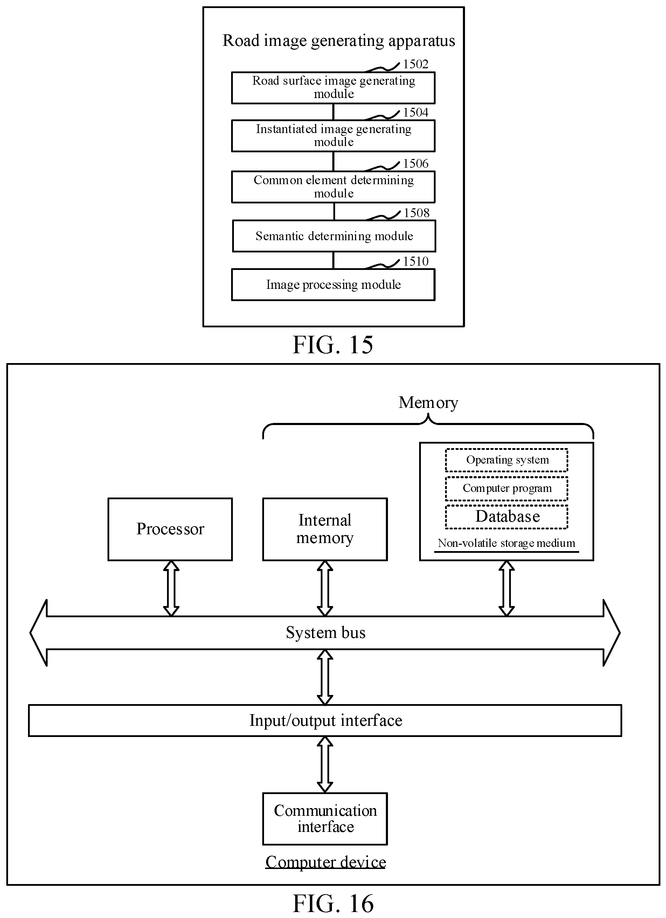

In an embodiment, as shown in FIG. 15, a road image generating apparatus is provided, which includes a road surface image generating module 1502, an instantiated image generating module 1504, a common element determining module 1506, a semantic determining module 1508, and an image processing module 1510.

The road surface image generating module 1502 is configured to perform instance segmentation on a road imagery to obtain an instance segmentation result, and generate, based on the instance segmentation result, a road surface image.

The instantiated image generating module 1504 is configured to perform void filling on a void region in the road surface image, and instantiate a void-filled road surface image to obtain an instantiated image including a plurality of road instances.

The common element determining module 1506 is configured to determine, based on edges of the road instances in the instantiated image, a common element shared by the road instances.

The semantic determining module 1508 is configured to perform, according to the road instances, semantic division on the common element to obtain semantic information of the common element.

The image processing module 1510 is configured to perform, based on the semantic information of the common element, image editing on the road instances in the instantiated image to generate a road image.

In the foregoing embodiment, instance segmentation is performed on the road imagery to obtain an instance segmentation result, and the road surface image is generated based on the instance segmentation result; void filling is performed on the void region in the road surface image, and instantiation is performed on the void-filled road surface image to obtain the instantiated image; the common element shared by the road instances is determined based on the edges of the road instances in the instantiated image; semantic division is performed on the common element according to the road instances to obtain the semantic information of the common element; and image editing is performed on the road instances in the instantiated image based on the semantic information of the common element to generate the road image. By means of void filling and instantiation processing, voids in a reconstructed image caused by a shielding problem of the road imagery may be avoided, integrity and continuity of each road instance (for example, a road segment road surface and an intersection road surface) in the finally generated road image are ensured, and accuracy of the road image is improved. A relationship between adjacent instances may be determined by determining the common element and performing semantic division. Further, with reference to image editing based on the semantic information, the finally generated road image may include more accurate and richer semantic information, so that the information richness and accuracy of the road image are improved.

In an embodiment, the road surface image generating module 1502 is further configured to segment the road imagery to obtain different road instances; perform region fusion on the road instances to obtain a road surface region fused with at least one road instance; and generate the road surface image by using the road surface region fused with at least one road instance as a foreground.

In an embodiment, the instantiated image generating module 1504 is further configured to perform void detection on the road surface image to obtain candidate void regions; determine a void region satisfying a filling condition from the candidate void regions; and perform expansion processing on an adjacent road surface region of the void region in the road surface image to obtain a void-filled road surface image.

In an embodiment, the void-filled road surface image includes a void-filled region and a complementary road surface region. The instantiated image generating module 1504 is further configured to instantiate the complementary road surface region to obtain an initial instantiated image; and instantiate the void-filled region in the initial instantiated image to obtain the instantiated image.

In an embodiment, the instantiated image generating module 1504 is further configured to acquire the instance segmentation result obtained by performing the instance segmentation on the road imagery, where the instance segmentation result includes at least two road instances and corresponding confidence coefficients; determine, for the sub-region of each road surface region in the void-filled road surface image, a candidate road instance matching a shape and a position of the sub-region from the at least two road instances; select, in response to that a number of the candidate road instances is at least two, a target road instance with a confidence coefficient satisfying a confidence coefficient condition from the candidate road instances; and fill, based on the target road instance, the sub-region to obtain the initial instantiated image.

In an embodiment, the void-filled region includes a first void-filled region and a second void-filled region, and an area of the first void-filled region is greater than an area of the second void-filled region. The initial instantiated image is a first instantiated image. The instantiated image generating module 1504 is further configured to determine, based on an adjacent instance of the first void-filled region, an instance category; generate, in the first instantiated image and according to the instance category, a new road instance in the first void-filled region to obtain a second instantiated image; determine a road instance to which the second void-filled region belongs; and instantiate, in the second instantiated image and based on the road instance to which the second void-filled region belongs, the second void-filled region to obtain the instantiated image.

In an embodiment, the common element determining module 1506 is further configured to perform edge detection on the instantiated image to obtain the edges of the road instances in the instantiated image; determine, based on the edges, a road instance framework in the instantiated image; and determine, based on a connection relationship in the road instance framework, the common element shared by the road instances.

In an embodiment, the common element includes a key edge, and semantic information of the common element includes edge-level semantic information. The semantic determining module 1508 is further configured to determine a target road instance to which the key edge belongs; and perform, based on semantic information of the target road instance, semantic division on the key edge to obtain the edge-level semantic information.

In an embodiment, the semantic determining module 1508 is further configured to determine, based on the semantic information of the target road instance, a processing mode of the key edge; perform, according to the processing mode, optimization processing on the key edge to obtain a processed key edge; and perform, based on the semantic information of the target road instance, semantic division on the processed key edge to obtain the edge-level semantic information.

In an embodiment, the image processing module 1510 is further configured to add, based on the semantic information of the common element, a semantic label to each road instance in the instantiated image to obtain a semantically optimized road instance; and generate, based on the semantically optimized road instance, the road image.

In an embodiment, the image processing module 1510 is further configured to acquire a road element to be added; determine an element addition position of the road element to be added in the road image; and draw, according to semantic information of the road element to be added, the road element to be added at the element addition position to obtain an element-optimized road image.

The modules in the foregoing road image generating apparatus may be partially or completely implemented through software, hardware, or any combination thereof. The foregoing modules may be embedded in or independent of a processor in a computer device in a form of hardware, or may be stored in a memory in the computer device in a form of software, such that the processor may invoke and execute operations corresponding to the modules.

In an embodiment, a computer device is provided. The computer device may be a server, and an internal structural diagram thereof may be shown in FIG. 16. The computer device includes a processor, a memory, an input/output (I/O for short) interface, and a communication interface. The processor, the memory, and the I/O interface are connected through a system bus, and the communication interface is connected to the system bus through the I/O interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running of the operating system and the computer program in the non-volatile storage medium. The database of the computer device is configured to store data needed by executing the road image generating method and/or a road image generated by executing the road image generating method. The I/O interface of the computer device is configured to exchange information between the processor and an external device. The communication interface of the computer device is configured to connect to and communicate with an external terminal through a network. The computer program, when being executed by the processor, implements a road image generating method.

For a person skilled in the art, a structure shown in FIG. 16 is merely a block diagram of part of a structure related to a solution of this application, and does not constitute a limitation to the computer device to which the solution of this application is applied. Specific computer devices may include more or less components than those shown in the figure, or some components may be combined, or different component arrangements are provided.

In an embodiment, a computer device is further provided. The computer device includes a memory and a processor. The memory has a computer program stored therein. The processor, when executing the computer program, implements the operations of each of the foregoing method embodiments.

In an embodiment, a computer-readable storage medium is provided. The computer-readable storage medium has a computer program stored therein. The computer program, when executed by a processor, implements the operations of each of the foregoing method embodiments.

In an embodiment, a computer program product is provided. The computer program product includes a computer program. The computer program, when executed by a processor, implements the operations of each of the foregoing method embodiments.

User information (including, but not limited to, user equipment information, personal information of a user, and the like) and data (including, but not limited to, data for analysis, stored data, displayed data, and the like) involved in this application both are information and data that are authorized by a user or fully authorized by all parties. Collection, use, and processing of related data need to comply with relevant laws and regulations of relevant countries and regions.

A person of ordinary skill in the art may understand that all or some of procedures of the method in the foregoing embodiments may be implemented by a computer program instructing relevant hardware. The computer program may be stored in a non-volatile computer-readable storage medium. When the computer program is executed, the procedures of the foregoing method embodiments may be included. Any reference to a memory, a database, or other media used in the embodiments provided by this application may include at least one of a nonvolatile memory and a volatile memory. The nonvolatile memory may include a read-only memory (ROM), a magnetic tape, a floppy disk, a flash memory, an optical memory, a high-density embedded nonvolatile memory, a resistive random access memory (ReRAM), a magnetoresistive random access memory (MRAM), a ferroelectric random access memory (FRAM), a phase change memory (PCM), a graphene memory, and the like. The volatile memory may be a random access memory (RAM) or an external cache memory. For the purpose of illustration rather than limitation, the RAM may be in various forms, such as a static random access memory (SRAM), or a dynamic random access memory (DRAM). The database involved in the embodiments provided in this application may include at least one of a relational database and a non-relational database. The non-relational database may include a distributed database based on a block chain, and is not limited thereto. The processor involved in the embodiments provided in this application may be a general purpose processor, a central processing unit, a graphic processing unit, a digital signal processor, a programmable logic unit, a data processing logic unit based on quantum computing, and the like, and is not limited thereto.

Technical features of the foregoing embodiments may be randomly combined. To make description concise, not all possible combinations of the technical features in the foregoing embodiments are described. However, the combinations of these technical features shall be considered as falling within the scope recorded by this specification provided that no conflict exists.

The foregoing embodiments only describe several implementations of this application, which are described specifically and in detail, but cannot be construed as a limitation to the patent scope of the present disclosure. For a person of ordinary skill in the art, several transformations and improvements may be made without departing from the idea of this application. These transformations and improvements belong to the protection scope of this application. Therefore, the protection scope of the patent of this application shall be subject to the appended claims.

## Claims

1. A road image generating method, executed by a computer device, the method comprising:
performing instance segmentation on a road imagery to obtain an instance segmentation result, and generating, based on the instance segmentation result, a road surface image;
performing void filling on a void region in the road surface image, and instantiating a void-filled road surface image to obtain an instantiated image comprising a plurality of road instances;
determining, based on edges of the road instances in the instantiated image, a common element shared by the road instances;
performing, according to the road instances, semantic division on the common element to obtain semantic information of the common element; and
performing, based on the semantic information of the common element, image editing on the road instances in the instantiated image to generate a road image.

2. The method according to claim 1, wherein the performing instance segmentation on a road imagery to obtain an instance segmentation result, and generating, based on the instance segmentation result, a road surface image comprises:
segmenting the road imagery to obtain different road instances;
performing region fusion on the road instances to obtain a road surface region fused with at least one of the road instances; and
generating the road surface image by using the road surface region fused with at least one of the road instances as a foreground.

3. The method according to claim 1 or 2, wherein the performing void filling on a void region in the road surface image comprises:
performing void detection on the road surface image to obtain candidate void regions;
determining a void region satisfying a filling condition from the candidate void regions; and
performing expansion processing on an adjacent road surface region of the void region in the road surface image to obtain the void-filled road surface image.

4. The method according to any one of claims 1 to 3, wherein the void-filled road surface image comprises a void-filled region and a complementary road surface region; and
the instantiating a void-filled road surface image to obtain an instantiated image comprises:
instantiating the complementary road surface region to obtain an initial instantiated image; and
instantiating the void-filled region in the initial instantiated image to obtain the instantiated image.

5. The method according to claim 4, wherein the instantiating the complementary road surface region to obtain an initial instantiated image comprises:
acquiring the instance segmentation result obtained by performing the instance segmentation on the road imagery, the instance segmentation result comprising at least two road instances and corresponding confidence coefficients;
determining, for a sub-region of each road surface region in the void-filled road surface image, at least one candidate road instance matching a shape and a position of the sub-region from the at least two road instances;
selecting, in response to that a number of the at least one candidate road instance is at least two, a target road instance with a confidence coefficient satisfying a confidence coefficient condition from the candidate road instances; and
filling, based on the target road instance, the sub-region to obtain the initial instantiated image.

6. The method according to claim 4 or 5, wherein the void-filled region comprises a first void-filled region and a second void-filled region, and an area of the first void-filled region is greater than an area of the second void-filled region; the initial instantiated image is a first instantiated image; and
the instantiating the void-filled region in the initial instantiated image to obtain the instantiated image comprises:
determining, based on an adjacent instance of the first void-filled region, an instance category;
generating, in the first instantiated image and according to the instance category, a new road instance in the first void-filled region to obtain a second instantiated image;
determining a road instance to which the second void-filled region belongs; and
instantiating, in the second instantiated image and based on the road instance to which the second void-filled region belongs, the second void-filled region to obtain the instantiated image.

7. The method according to any one of claims 1 to 6, wherein the determining, based on edges of road instances in the instantiated image, a common element shared by the road instances comprises:
performing edge detection on the instantiated image to obtain edges of the road instances in the instantiated image;
determining, based on the edges, a road instance framework in the instantiated image; and
determining, based on a connection relationship in the road instance framework, the common element shared by the road instances.

8. The method according to any one of claims 1 to 7, wherein the common element comprises a key edge, and the semantic information of the common element comprises edge-level semantic information; and the performing, according to the road instances, semantic division on the common element to obtain semantic information of the common element comprises:
determining a target road instance to which the key edge belongs; and
performing, based on semantic information of the target road instance, semantic division on the key edge to obtain the edge-level semantic information.

9. The method according to claim 8, further comprising:
determining, based on the semantic information of the target road instance, a processing mode of the key edge;
performing, according to the processing mode, optimization processing on the key edge to obtain a processed key edge; and
the performing, based on semantic information of the target road instance, semantic division on the key edge to obtain the edge-level semantic information comprises:
performing, based on the semantic information of the target road instance, semantic division on the processed key edge to obtain the edge-level semantic information.

10. The method according to any one of claims 1 to 9, wherein the performing, based on the semantic information of the common element, image editing on the road instances in the instantiated image to generate a road image comprises:
adding, based on the semantic information of the common element, a semantic label to each road instance in the instantiated image to obtain a semantically optimized road instance; and
generating, based on the semantically optimized road instance, the road image.

11. The method according to any one of claims 1 to 10, further comprising:
acquiring a road element to be added;
determining an element addition position of the road element to be added in the road image; and
drawing, according to semantic information of the road element to be added, the road element to be added at the element addition position to obtain an element-optimized road image.

12. A road image generating apparatus, comprising:
a road surface image generating module, configured to perform instance segmentation on a road imagery to obtain an instance segmentation result, and generate, based on the instance segmentation result, a road surface image;
an instantiated image generating module, configured to perform void filling on a void region in the road surface image, and instantiating a void-filled road surface image to obtain an instantiated image comprising a plurality of road instances;
a common element determining module, configured to determine, based on edges of the road instances in the instantiated image, a common element shared by the road instances;
a semantic determining module, configured to perform, according to the road instances, semantic division on the common element to obtain semantic information of the common element; and
an image processing module, configured to perform, based on the semantic information of the common element, image editing on the road instances in the instantiated image to generate a road image.

13. A computer device, comprising a memory and a processor, the memory having a computer program stored therein, and the processor, when executing the computer program, implementing operations of the method according to any one of claims 1 to 11.

14. A computer-readable storage medium, having a computer program stored therein, and the computer program, when executed by a processor, implementing operations of the method according to any one of claims 1 to 11.

15. A computer program product, comprising a computer program, and the computer program, when executed by a processor, implementing operations of the method according to any one of claims 1 to 11.
